# EUROPEAN PATENT APPLICATION

(11) **EP 4 632 640 A1**
(43) Date of publication of application: **15.10.2025**
(21) Application number: 25170398.9
(22) Date of filing: 14.04.2025
(51) Int. Cl.: G06Q 10/06

(54) **ARTIFICIAL INTELLIGENCE POWERED CHIEF OF STAFF BOT**

(30) Priority: 12.04.2024 US 202463633646 P; 09.04.2025 US 202519174814
(71) Applicant: TransforML Platforms Inc., Ottawa ON K2P 0X5 (CA)
(72) Inventor: Zaidi, Syed Ahmad Raza, Ottawa, K2P 0X5 (CA); Ahmed, Syed Ali, Ottawa, K2P 0X5 (CA); Tang, Xiaohu, Ottawa, K2P 0X5 (CA)
(74) Representative: Fuchs Patentanwälte Partnerschaft mbB

(57) **Abstract**

A method implements an artificial intelligence powered chief of staff bot. The method involves receiving natural language input. The method further involves processing the natural language input using a language model to generate strategy map nodes. The method further involves processing the strategy map nodes and a strategy map to determine a mapping of the strategy map nodes to the strategy map. The method further involves processing user input to generate an updated mapping of the strategy map nodes. The method further involves applying the updated mapping to the strategy map to generate an updated strategy map.

## Description

### CROSS REFERENCE TO RELATED APPLICATIONS

This application claims the benefit of U.S. Nonprovisional Application 19/174,814, filed April 9, 2025, and of U.S. Provisional Application 63/633,646, filed April 12, 2024.

### BACKGROUND

Computer systems capture and display information using data structures and user interfaces. For example, graphical user interfaces (GUls) may be used to collect and then store information from user inputs into data structures. The user inputs may include natural language provided by the user that is stored in a repository or database. In response to the interaction with the user, information may be manipulated in the data structures and displayed. Challenges include structuring the data and user interfaces to identify specific items, set priorities, and focus on certain items, as well as maintaining a rhythm for performing actions to update the data within the data structures with the user interfaces.

### SUMMARY

In general, in one or more aspects, the disclosure relates to a method, such as a computer-implemented method, that implements an artificial intelligence powered chief of staff bot. The method involves receiving natural language input. The method further involves processing the natural language input using a language model to generate strategy map nodes. The method further involves processing the strategy map nodes and a strategy map to determine a mapping of the strategy map nodes to the strategy map. The method further involves processing user input to generate an updated mapping of the strategy map nodes. The method further involves applying the updated mapping to the strategy map to generate an updated strategy map.

In general, in one or more aspects, the disclosure relates to a system that includes at least one processor and an application that executes on the at least one processor. Executing the application performs receiving natural language input. Executing the application further performs processing the natural language input using a language model to generate strategy map nodes. Executing the application further performs processing the strategy map nodes and a strategy map to determine a mapping of the strategy map nodes to the strategy map. Executing the application further performs processing user input to generate an updated mapping of the strategy map nodes. Executing the application further performs applying the updated mapping to the strategy map to generate an updated strategy map.

In general, in one or more aspects, the disclosure relates to a non-transitory computer readable medium including instructions executable by at least one processor. Executing the instructions performs receiving natural language input. Executing the instructions further performs processing the natural language input using a language model to generate strategy map nodes. Executing the instructions further performs processing the strategy map nodes and a strategy map to determine a mapping of the strategy map nodes to the strategy map. Executing the instructions further performs processing user input to generate an updated mapping of the strategy map nodes. Executing the instructions further performs applying the updated mapping to the strategy map to generate an updated strategy map.

Other aspects of one or more embodiments may be apparent from the following description and the appended claims.

### BRIEF DESCRIPTION OF DRAWINGS

FIG. 1 shows a diagram in accordance with the disclosure.
FIG. 2 shows a method in accordance with the disclosure.
FIG. 3, FIG. 4, FIG. 5, FIG. 6, FIG. 7, FIG. 8A, FIG. 8B, and FIG. 8C show examples in accordance with the disclosure.
FIG. 9A and FIG. 9B show computing systems in accordance with the disclosure.

Similar elements in the various figures may be denoted by similar names and reference numerals. The details of the features and elements described in one figure may extend to similarly named features and elements in different figures.

### DETAILED DESCRIPTION

Embodiments of the present disclosure relate to a management application that operates as an artificial intelligence (AI) powered chief of staff bot. The application structures data and provides interactive user interfaces that identify specific items, set priorities, and focus on certain items. Additionally, the management application maintains a rhythm for performing actions to update the data within the data structures.

The management application interacts with users of the system to identify strategy map nodes for a strategy map. The interaction may occur through natural language input, which can include text, voice, transcripts, and other forms of communication. The natural language input is processed using a language model to identify objective objects, topic objects, and performance metrics, such as milestones and performance indicators. The elements are then used to form strategy map nodes that can be mapped into a strategy map.

The strategy map nodes are interactively presented to the user to receive additional input, which is incorporated into the strategy map nodes. With the additional input, an updated mapping from the strategy map nodes to the strategy map is generated.

The management application structures discussions on behalf of the user to identify nodes of a strategy map. The management application proactively identifies topics and takes action on behalf of users to maintain organizational discipline and rhythm, which may include reminding users of actions or priorities. Using the knowledge captured in the knowledge graph, the management application may generate answers to queries regarding the progress of work via a chat-bot interface. The management application may automatically surface topics being discussed, actions being taken, decisions made, and objectives being worked on for display in a strategy map.

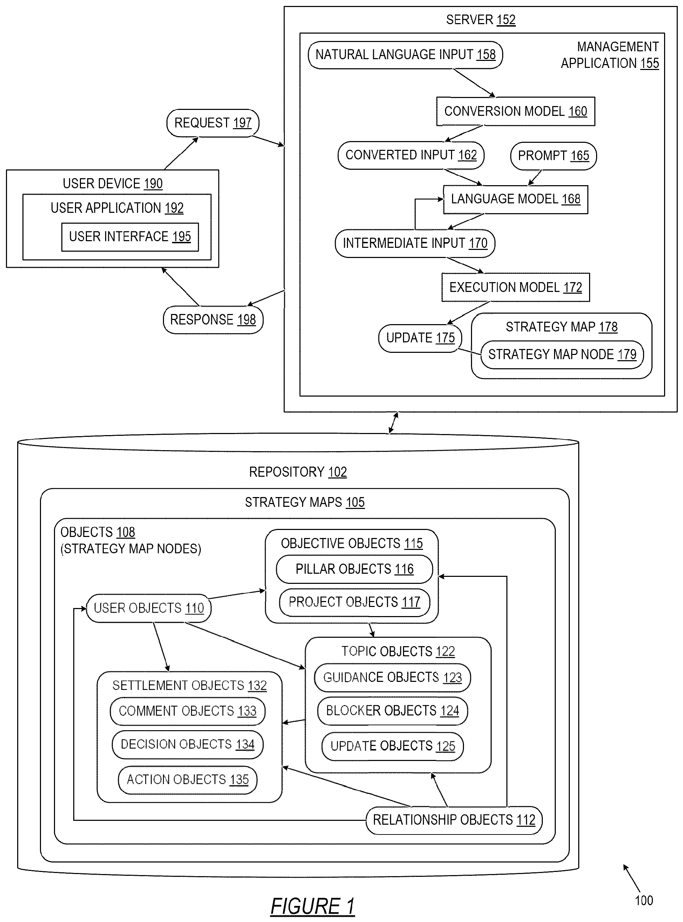

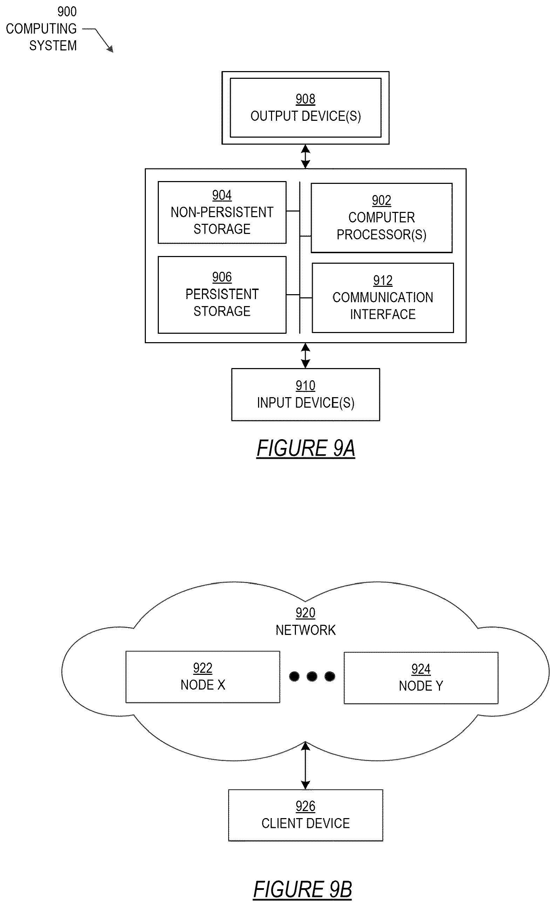

Turning to Figure 1, the system (100) is a computing system shown in accordance with one or more embodiments. The system (100) and corresponding components may utilize the computing systems described in Figure 9A and Figure 9B to implement a management application that operates as an artificial intelligence (AI) powered chief of staff bot. The system (100) includes the repository (102), the server (152), and the user device (190).

The repository (102) is a collection of devices that form a unit of data storage that stores the data used by the system (100). The repository (102) may include multiple different, potentially heterogenous, storage units and/or devices. The repository (102) stores data utilized by other components of the system (100). The data stored by the repository (102) includes the strategy maps (105).

The strategy maps (105) are data structures stored on the repository (102). The strategy maps (105) include the objects (108), which may be referred to as strategy map nodes.

The objects (108) are a set of computer programming objects that store data extracted from user inputs in object records in the repository (102). The data extracted from the user inputs may include textual descriptions stored as objective records within the objects (108). Each of the objects (108) may include text (i.e., an objective record) that describes the object and may include references to other ones of the objects (108). The objects (108) include the user objects (110), relationship objects (112), the objective objects (115), the topic objects (122), and the settlement objects (132). The objects (108) may each be stored at a location within data storage, i.e., within the repository (102).

Each object of the objects (108) may include references to other objects of the objects (108) that identify the locations of the other objects within the data storage. The objects (108) may be structured with multiple hierarchies. One type of hierarchy is the hierarchy between different types of objects. For example, each of the objective objects (115) may be upstream from (or a parent of) multiple topic objects (122). Each of the topic objects (122) may be upstream from (or a parent of) multiple settlement objects (132).

Each object of the objects (108) may include properties that represent performance metrics. A performance metric may be a performance indicator or a milestone. A performance indicator may be a numerical value that may be compared against a threshold to determine whether an object represents a strategy node identified as an off track node. A milestone may include a textual description and a date. When the current date is past the date of the milestone, the strategy node represented by the corresponding object may be identified as an off track node.

The user objects (110) identify the users of the system (100). Information stored in the object record of a user object may include a name for the user, contact information (including an email address), *etc.* Each of the user objects (110) may be associated with one or more of the objective objects (115), the topic objects (122), and the settlement objects (132). Association of the user objects (110) to one or more of the objects (108) (including to one or more of the objective objects (115), the topic objects (122), and the settlement objects (132)) may provide an identification of the users that are responsible for the corresponding objects (108).

The objective objects (115) store information describing objectives that are associated with the users of the system (100). The information describing the objectives may be stored as text after being extracted from user inputs received by the system (100). The information is stored in objective records of the objective objects (115).

The relationship objects (112) identify the relationships between the other objects or with tags and labels. For example, one of the relationship objects (212) may identify the hierarchical relationship between one of the pillar objects (216) and one of the project objects (217). Multiple projects represented by the project objects (217) may be related to a tag or label. The tag or label may represent a product that each of the projects affect or are related to. The relationship objects (112) may be stored as edges in a graph database with the other objects (the user objects (210), the objective objects (115), the topic objects (122), and the settlement objects (132), etc.) stored as nodes in the graph database.

The objective objects (115) may further maintain a hierarchy between the objective objects (115), such as the hierarchy between the pillar objects (116) and the project objects (117). For example, one of the objective objects (115) (e.g., one of the pillar objects (116)) may be a parent that is upstream from other objective objects (115) (e.g., one of the project objects (117)). The hierarchy between the objective objects (115) may correspond to a hierarchy between users of the system. For example, a user Jack may be associated with a first objective object that is the parent to a second objective object that is associated with the user Janice, who is a subordinate of Jack. Additionally, each of the objective objects (115) may be associated with one or more of the topic objects (122).

The pillar objects (116) are one type of the objective objects (115) that may be superordinate to the project objects (117). The text stored in the object record of one of the pillar objects (116) identifies a pillar (*i.e.,* an objective) that is superordinate to one or more projects corresponding to the project objects (117).

The project objects (117) are one type of the objective objects (115) that may be subordinate to the pillar objects (116). The text stored in the object record of one of the project objects (117) identifies a project (*e.g.,* a task or set of tasks) that may be part of one of the pillar objects (116).

The topic objects (122) store information describing topics that relate to the objectives stored with the objective objects (115). One of the topic objects (122) may be associated with one of the objective objects (115) and one of the objective objects (115) may be associated with multiple topic objects (122). The information describing the topics of the topic objects (122) may be stored as text after the text is extracted from user inputs received by the system (100). The topic objects (122) may include several types, including the guidance objects (123), the blocker objects (124), and the update objects (125).

The guidance objects (123) are one type of the topic objects (122). In an embodiment, the text stored in the object record of one of the guidance objects (123) may include requests for guidance with regards to the objectives stored in the object records for the objective objects (115) to which the guidance objects (123) are associated.

The blocker objects (124) are one type of the topic objects (122). In an embodiment, the text stored in the object record of one of the blocker objects (124) may include a description of issues preventing progress with the objectives stored in the object records for the objective objects (115) to which the blocker objects (124) are associated.

The update objects (125) are one type of the topic objects (122). In an embodiment, the text stored in the object record of one of the update objects (125) may include descriptions of updates related to the objectives stored in the object records for the objective objects (115) to which the update objects (125) are associated.

The settlement objects (132) store information related to the topics of the topic objects (122). In an embodiment, one of the settlement objects (132) may be associated with one of the topic objects (122). Information stored by the settlement objects (132) may be stored as text after the text is extracted from user inputs received by the system (100). The settlement objects (132) may include several types, including the comment objects (133), the decision objects (134), and the action objects (135).

The comment objects (133) are one type of the settlement objects (132). In an embodiment, the text stored in the object record of one of the comment objects (133) provides additional information about one of the topics of the topic objects (122).

The decision objects (134) are one type of the settlement objects (132). In an embodiment, the text stored in the object record of one of the decision objects (134) is a record of a decision made with regard to one of the topics of the topic objects (122).

The action objects (135) are one type of the settlement objects (132). In an embodiment, the text stored in the object record of one of the action objects (135) is a record of an action related to one of the topics of the topic objects (122).

Continuing with Figure 1, the system (100) also may include the server (152). The server (152) is one or more computing systems, which may be part of a distributed computing environment. An example of the server (152) may be the computing system (900) shown in Figure 9A.

The server (152) may host and/or execute one or more processes, programs, applications, *etc.* For example, the server (152) may execute one or multiple instantiations of the management application (155) using different computing systems and servers. The server (152) may interact with the user device (190) to process information. The server (152) executes the management application (155).

The management application (155) is a collection of programs operating on the server (152). The management application (155) interfaces with the user application (192) to process messages with inputs from the users, update the data in the repository (102), and present information displayed within the limitations of the user device (190). The management application (155) processes multiple types of data with multiple types of models to generate the strategy map (178) from the natural language input (158). The data processed by management application (155) includes the natural language input (158), the converted text (162), the prompt (165), the intermediate text (170), the update (175), and the strategy map (178). The models used by the management application (155) include the conversion model (160), the language model (168), and the execution model (172).

The natural language input (158) is the input to the conversion model (160) that uses natural language. Natural language refers to human languages that are used to communicate, such as English, Spanish, Chinese, *etc.,* which are complex and variable in terms of vocabulary, grammar, and syntax. The natural language input (158) may be text data from documents, emails, chats, transcripts, *etc.,* and may be audio data from voice recordings, phone calls, podcasts, audio streams, *etc.*

The conversion model (160) is a program that operates to process the natural language input (158) and generate the converted input (162). The conversion model (160) transforms the raw natural language input (the natural language input (158)) into structured and meaningful data (i.e., the converted input (162)) suitable for further analysis or action by downstream processes and systems. Different types of conversion techniques may be used for different types of inputs.

The converted input (162) is the output from the conversion model (160). The converted input (162) may be in a different format, structure, or type than the natural language input (158). As an example, the natural language input (158) may be a word processing document and the converted input (162) may be a formatted text document (*e.g.,* a markdown text document).

The prompt (165) is an input to the language model (168). The prompt (165) may be one of multiple prompts executed by the language model (168) to generate the intermediate input (170). The prompt (165) may be in the form of text that includes instructions and examples for processing the converted input (162) to generate the intermediate input (170). The prompt (165) may also include instructions and examples for processing the converted input (162) with one or more previous versions of the intermediate input (170) to generate a subsequent version of the intermediate input (170). The prompt (165) may be generated dynamically based on the converted input (162) and previous versions of the intermediate input (170).

The language model (168) is a program that operates to process the converted input (162) and generate the intermediate input (170) using the prompt (165). The language model (168) is a machine learning model (*e.g.,* a large language model (LLM)) may understand and generate natural language output from natural language input. The language model (168) is trained with large amounts of text data to learn patterns, structures, and relationships within natural language to predict the likelihood of word sequences and generate coherent text as output. Components of the language model (168) may include training data, tokens, embeddings, and neural networks. Training data includes large datasets of text in the natural language that the model uses to learn language patterns and structures. Tokens are units of text, such as words or subwords that the language model (168) processes. Embeddings are numerical representations of the tokens in a continuous vector space, capturing semantic relationships between words and corresponding tokens in the natural language text. Neural networks may include deep learning architectures to process the embeddings through interconnected layers to understand and generate human language. The language model (168) may utilize architectures and algorithms including generative pre-trained transformer (GPT), and bidirectional encoder representations from transformers (BERT), *etc.* The language model (168) may be called with multiple prompts (including the prompt (165)) to generate multiple versions of the intermediate input (170).

The intermediate input (170) is an output from the language model (168) and an input to the execution model (172). Previous versions of the intermediate input (170) may be inputs to the language model (168). The intermediate input (170) may be text generated by the language model (168) from the converted input (162) for the strategy map node (179) to be incorporated into the strategy map (105).

The execution model (172) is a program that operates to process the intermediate input (170) to generate the update (175). The execution model (172) may extract the information that forms the strategy map node (179) from the intermediate input (170) to generate the update (175).

The update (175) may include revisions for one or more of the topic object (128), the objective object (130), and the settlement object (132). The update (125) may be included in the response (198) that is transmitted back to the user device (190), which may display the update (125).

The strategy map (178) is one of the strategy maps (105) from the repository (102). The strategy map (178) or a portion thereof may be transmitted to the user device (190) for display in the user interface (195). The strategy map (178) is updated with the update (175) to include the strategy map node (179).

The strategy map node (179) is one of multiple strategy map nodes within the strategy map (178). The strategy map node (179) is one of the objects (108) that was extracted from the intermediate input (170) by the extraction model (172) into the update (175). For example, the strategy map node (179) may be one of the pillar objects (116), the project objects (117), the optic objects (122), *etc.*

The user device (190) receives user input that is included in the request (197) that is transmitted to the server (152). The server (152) applies a workflow using the conversion model (160), the language model (168), and the execution model (172) to the user input in the request (197) to generate the response (198).

Continuing with Figure 1, the user device (190) may interact with the server (152). The user device (190) may be computing systems in accordance with Figure 9A and Figure 9B. The user device (190) communicates with the server (152) through the request (197) and the response (198). The user device (190) may include and execute the user application (192).

The user application (192) are programs that operate on the user device (190) to provide user interaction. The user application (192) may collect user inputs and display outputs in response to the user inputs, which may be through the user interface (195).

The user interface (195) is part of the user application (192) that provides a point of interaction between the user and the user device (190), encompassing elements and mechanisms for input and feedback. The user interface (195) may include input elements like buttons, text fields, and menus for user commands and data, and output elements, such as screens, notifications, and messages to convey information back to the user. The layout and design of the user interface (195) provide ease of use and accessibility for interaction patterns that may involve clicks, taps, swipes, voice commands, *etc.* The user interface (195) may be a graphical user interface (GUI) with visual elements, a command-line interface (CLI) with text-based commands, a voice user interface (VUI) for spoken language interaction, a touch user interface for touch gestures, *etc.*

The request (197) may be one of multiple requests transmitted from the user device (190) and received by the server (152). The request (197) may request the display of and provide updates to the strategy map (178). As an example, the request (197) may be an initial request that identifies a document to be processed to generate one or more of the pillar objects (116), the project objects (117), the topic objects (122), *etc.* The request (197) may be a subsequent request that provides feedback to the management application (155) for changes to one or more of the pillar objects (116), the project objects (117), the topic objects (122), *etc.*

The response (198) may be one of multiple responses received by the user device (190) and transmitted by the server (152). The response (198) may include a set of the objects (108) that correspond to the strategy map (178), which may be displayed on the user device (190) through the user interface (195).

Although described within the context of a client server environment with servers and user devices, aspects of the disclosure may be practiced with a single computing system and application. For example, a monolithic application may operate on a computing system to perform the same functions as one or more of the applications executed by the server (152) and the user device (190).

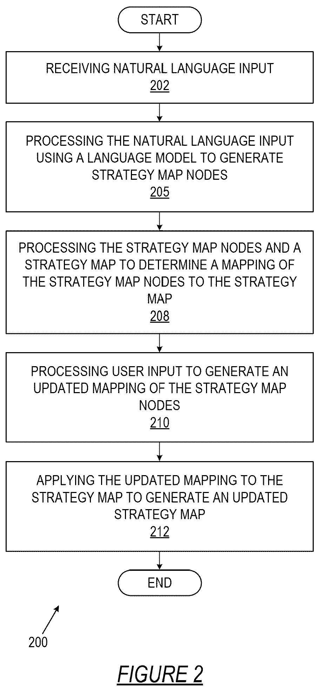

Figure 2 shows a flowchart of a method implemented as part of an artificial intelligence powered chief of staff bot. The method of Figure 2 may be implemented using the systems described in the other figures, and one or more of the steps may be performed on, or received at, one or more computer processors. The system may include at least one processor and an application that, when executing on the at least one processor, performs the method. A non-transitory computer readable medium may include instructions that, when executed by one or more processors, perform the method. The outputs from various components (including models, functions, procedures, programs, processors, *etc.)* for performing the method may be generated by applying a transformation to inputs using the components to create the outputs without using mental processes or human activities.

Turning to Figure 2, the process (200) updates a strategy map with strategy map nodes based on user feedback. The process (200) may include multiple steps (e.g., Block 202 through Block 212) that may execute on the components described in the other figures, including those of Figure 1, Figure 9A, Figure and 9B.

Block 202 includes receiving natural language input. The natural language input may be a collection of data (*e.g.,* a set of files) identified or provided by a user. A reference to the collection of data or the data itself may be transmitted and subsequently received. The user may provide the natural language input in response to interaction with a user interface that may receive text or audio input from the user.

Block 205 includes processing the natural language input using a language model to generate strategy map nodes. One or more prompts may be used with the natural language input to generate the strategy map nodes. One of the prompts may direct the language model to determine the type of input related to the natural language input. For example, one type of input may be for a strategic document and another type of input may be for a project. For a strategic document, another prompt may be used to identify pillar objects that may represent collections of project objects. For a project document, another prompt may be used to identify details about a project that are extracted from the natural language input into properties of a project object for a pillar object. Other types of objects, including user objects, topic objects, objective objects, settlement objects, *etc.,* may also be identified from the natural language input responsive to the prompts provided to the language model. The prompts directing the language model may be processed sequentially or concurrently by one or more instances of the language model. The output from one prompt may be used as an input for another prompt.

Processing the natural language input may involve extracting semantic relationships from the natural language input using the language model. Extracting semantic relationships may involve tokenizing the natural language input into a set of tokens that represent words, parts of word, syllables, phonemes, *etc.,* from the natural language input. The tokens may be mapped to embedding vectors that represent semantic meaning in a continuous space so that tokens (or words) with similar meaning will have similar embedding vector values. The embedding vectors generated from the natural language input may be processed with a machine learning model, such as a neural network to generate outputs that are also embedding vectors. The embedding vectors generated by the machine learning model may then be mapped back to tokens and then back to text or sound to generate the output of the language model. The model may be an intermediate input that may be used by a subsequent model (e.g., an execution model) or may be used again by the language model as part of another prompt.

Block 208 includes processing the strategy map nodes and a strategy map to determine a mapping of the strategy map nodes to the strategy map. Determining the mapping of the strategy map nodes to the strategy map may involve comparing the strategy map nodes generated from the natural language input with existing strategy map nodes from the strategy map. The comparison may match up user objects, objective objects, topic objects, settlement objects, *etc.,* between the existing strategy map nodes and the strategy map nodes generated from the natural language input. For example, the strategy map nodes from the natural language input may include a project object and a blocker object that correspond to an existing pillar object. Based on the correspondence the project object and the blocker object may be mapped to the pillar object. To determine the mappings between the objects, text from the objects may be converted to embedding vectors. Distances between the embedding vectors may be compared against thresholds to make the determination of whether one object should be a parent, child, sibling, *etc.,* of another object.

Block 210 includes processing user input to generate an updated mapping of the strategy map nodes. Processing the user input to generate an updated mapping may involve displaying the strategy map nodes and the strategy map through a user interface. The user interface may capture updates to the strategy map nodes provided by a user. The updates may include changing the hierarchies and collections of the strategy map nodes and may include changing the textual descriptions within the strategy map nodes. The hierarchies may be changed within the strategy map nodes by changing the references to other strategy map nodes. For example, a strategy map node representing a first pillar object may include references to strategy nodes that represent a first project object and a second project object. The first pillar object may be updated to remove the reference to the second project object which may be added to a strategy node representing a second pillar object. The changes described above operate to remove a second project from a first pillar and add the second project to a second pillar.

Block 212 includes applying the updated mapping to the strategy map to generate an updated strategy map. Applying the updated mapping involves updating the references within the strategy map nodes generated from the natural language input to refer to existing strategy map nodes in the strategy map. The existing strategy map nodes may also be updated to include references to the strategy map nodes generate from the natural language input.

The process (200) may further involve processing the updated strategy map to identify an off track node using the language model. An off track node is a strategy map node that is determined to be "off track". The determination of whether a strategy map node is off track may be made by comparing performance metrics of the strategy node to thresholds. If a performance metric for a strategy map node does not meet a corresponding threshold, the strategy map node may be identified as an off track node. For a performance metric that includes a performance indicator, the corresponding threshold may set a minimum value for the performance indicator. A strategy map node may be an off track node when a subordinate node (a child, grandchild, *etc.)* is identified as an off track node.

The process (200) may further involve transmitting an off track message based on the off track node. After determining that a strategy node is an off track node, a message indicating that the strategy node has been identified as an off track node may be generated and transmitted to a user device for display in the user interface.

The process (200) may further involve processing the updated strategy map to identify a regular cadence node using the language model. A strategy map node may be identified as a regular cadence node when the strategy map node identifies a periodic time frame for taking an action corresponding to the strategy map node. A strategy map node may include a parameter that identifies periodic time frame (weekly, monthly, quarterly, *etc.)* for generating messages about the strategy map node. For example, a project node may include a weekly periodic time frame. The current date may be compared to the periodic time frame and if the current date has passed then messages about the project node may be sent out. The messages sent out may request updates for the project node and nodes subordinate to the project node.

The process (200) may further involve transmitting a regular cadence message based on the regular cadence node. After determining that a strategy node is a regular cadence node and the periodic time frame for the regular cadence node has been met, then one or more messages regarding the regular cadence node may be generated and sent. For example, a project node may be a regular cadence node with a periodic time frame of one week, such that each of the users identified with the project node may be sent a message requesting updates from the users about the status of the project, including changes to the values of performance metrics.

The process (200) may further involve processing the updated strategy map to identify an overdue node using the language model. An overdue node is a strategy map node that is determined to be "overdue". The determination of whether a strategy map node is overdue may be made by comparing performance metrics of the strategy node to thresholds. For example, a performance metric may include a milestone, and the date of the milestone may be the threshold against which the current date is compared to determine if the strategy map node is an overdue node. A strategy map node may be an overdue node when a subordinate node (a child, grandchild, *etc.)* is identified as an overdue node.

The process (200) may further involve transmitting an overdue message based on the overdue node. After determining that a strategy node is an overdue node, a message indicating that the strategy node has been identified as an overdue node may be generated and transmitted to a user device for display in the user interface.

The process (200) may further involve using a retrieval augmented generation system to detect a duplicate between the strategy map nodes and existing strategy map nodes within the strategy map. The retrieval augmented generation system may compare embedding vectors generated for the strategy map nodes to determine when a strategy map node generated from the natural language input is a duplicate of an existing strategy map node within the strategy map. When a duplicate is found the subordinate nodes of the strategy map node generated from the natural language input may become subordinate nodes of the existing strategy map node identified as a duplicate.

The process (200) may further involve sending an update request when the duplicate does not have an update within an update threshold. If the most recent update to the existing strategy map node identified as a duplicate of the map node generated from the natural language input is not within the update threshold, then a message requesting an update for the existing strategy map node may be sent.

The process (200) may further involve sending an update notification when the update is within the update threshold. If the most recent update to the existing strategy map node identified as a duplicate of the map node generated from the natural language input is within the update threshold, then a message notifying the users of the updates may be sent.

The process (200) may further involve storing the strategy map nodes in a graph database and in a relational database. The strategy map nodes may be stored as nodes in the graph database and the relationships between the strategy map nodes may be stored as edges in the graph database. The strategy map nodes may be stored in the tables of the relational database.

The process (200) may further involve processing a query using the graph database when the query does not identify a project node in the strategy map. The nodes and edges within the graph database may be searched to identify strategy map nodes that relate to the query when the inquiry itself does not identify the project node.

The process (200) may further involve processing a query using the relational database when the query identifies the project node in the strategy map. When the project node is identified within the query, the project owner may be looked up within the tables of the relational database.

The process (200) may further involve displaying the updated mapping in an interactive graphical user interface. Displaying the updated mapping may involve moving the location of strategy map nodes within the display based on changes in the references between the strategy map nodes. For example, one project node may be moved from one pillar node to a different pillar node. Additionally, the updates to the mapping may include changes to the text of the object nodes, which may be reflected in the display of the strategy map.

The process (200) may further involve adjusting an adaptive layout of the strategy map responsive to the updated mapping. The adaptive layout may change the location of the object nodes based on the number and hierarchy of the object nodes. As an example a project node and each of the object nodes subordinate the project node may be moved from a first pillar node to a second pillar node when the hierarchy of the project node changes from the first pillar node to the second pillar node.

The process (200) may further involve generating the strategy map with a pillar object and a project object. As an example, the pillar object may be superordinate to the project object and displayed above the project object.

The process (200) may further involve storing the pillar object at a first location in data storage, which references the project object stored at a second location in the data storage. Each of the objects may be stored at different locations in data storage. The data storage may utilize graph databases, relational databases, *etc.,* to store the objects. An object stored in one of a graph database and a relational database may include references to other objects for one or both databases. For example, a pillar object superordinate to a guidance object may both be stored in both the graph database and the relational database. The pillar object may include references that identify the location of the guidance object in both the graph database and in the relational database.

The process (200) may further involve processing user input received as voice input through the user interface to update the mapping. The voice input may be an audio recording that may be received as part of a live stream session with a user. The voice input may be transcribed to text that is then tokenized and converted to embedding vectors to be processed by the language model. The voice input may also be tokenized without first being transcribed to text with the tokens representing phonemes from the voice input that are then converted to embedding vectors to be processed by the language model.

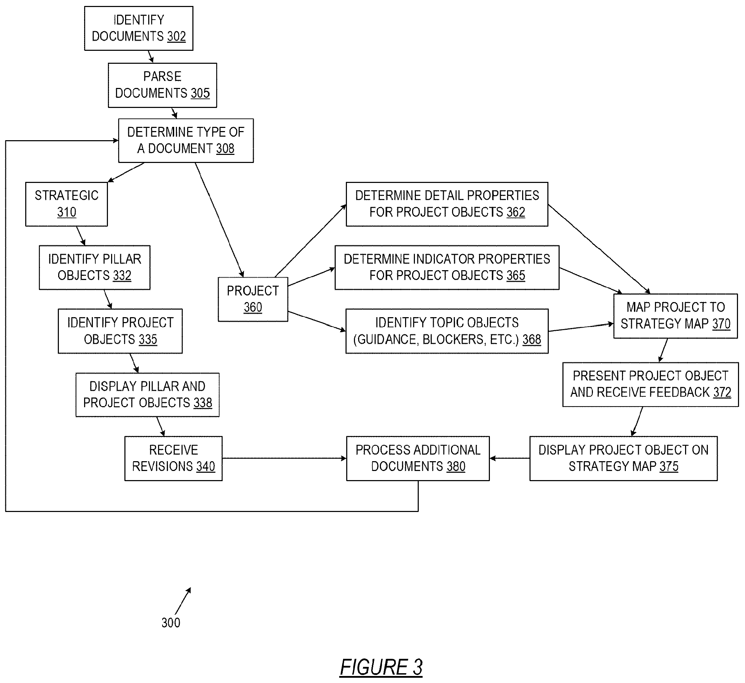

Turning to Figure 3, the workflow (300) processes documents to generate a strategy map. The workflow (300) may execute on the components of a computing system, such as the system (100) of Figure 1. Multiple prompts to a language model may be used to process documents identified by a user. For example, each of Blocks 308, 332, 335, 362, 365, and 368 may use a prompt to a language model to generate a response from the language model.

Block 302 involves identifying documents. Documents may be identified through user interface interaction through which a user may point the management application to a folder or an individual file to be processed. One of the documents may be selected to be processed with the management application.

Block 305 involves parsing a selected document. The document may be parsed by segmenting the document into smaller parts (e.g., 10 pages per segment) and converting into a formatted text format. The formatted text format may be a lightweight markup language (e.g., markdown) that may be processed by the language model. The converted document are input to the language model for interpretation.

Block 308 involves determining the type of a document. The determination may be made using a language model with a prompt directing the language model to identify the type of the document. As an example, the type of document may be "strategic" or "project". A "strategic" document may describe goals, strategies, or pillars that may be stored as objective objects in a strategy map. A "project" document may describe tasks or projects used for the strategies that may also be stored as objective objects in a strategy map. Both a strategic document and a project document may describe other objects, such as topic objects, settlement objects, user objects, *etc.,* that may be extracted from the document and incorporated into a strategy map. Responsive to the prompt for Block 308, the language model outputs a response that includes an identification of the type of document, identifications for the structure of the document, identifications for the places where descriptions for pillar objects (*i.e.,* "strategic pillars" written in natural language) may be described within the document. The response output from the language model may use structured text and tags for the identification of the structure of the document and the identification of the locations of the descriptions for the pillar objects within the document. The structured text (*e.g.,* JavaScript object notation (JSON)) may include value pairs where the key identifies a type of structure and the value identifies the location of the structure within the document. The tags may also be inserted into the document to identify the location of structures within the document as well as the description of the pillar objects. Based on the determination of the type of document the workflow may proceed to Block 310 when the document is a strategic document and to Block 360 when the document is a project document.

Block 310 involves the determination that the document is a strategic document. A set of strategic document prompts may be processed using the document that has been identified as a strategic document. The strategic document prompts may be processed sequentially and incorporate outputs from Block 305 (*e.g.,* the converted document) and from Block 308 (*e.g.,* the response identifying the structures and locations within the converted document).

Block 332 involves extracting pillar objects. The pillar objects may be extracted by processing the outputs from Block 305 (*e.g.,* the converted document) and from Block 308 (*e.g.,* the response identifying the structures and locations within the converted document) to extract text for one or more pillar objects. The pillar objects may form a strategy map. The response from the language model may revise the text from the converted document to summarize a description of a pillar from multiple sentences to a single sentence.

Block 335 involves extracting project objects. The project objects may be extracted by processing the outputs from Block 305 (*e.g.,* the converted document) and from Block 335 (*e.g.,* the pillar objects). The project objects may be mapped to the pillar objects and revised the strategy map. The response from the language model may revise the text from the converted document to summarize a description of a project from multiple sentences to a single sentence.

Block 338 involves displaying the pillar objects and project objects extracted at Block 332 and Block 335. The extracted pillar objects and project objects may be displayed on a user interface as a strategy map, which is a structured hierarchical map. The user interface may be interactive so that a user may adjust the relationships between the pillar objects and the project objects and adjust the descriptions (*i.e.,* text) for the pillar objects and project objects.

Block 340 involves receiving revisions. Changes made by a user (or multiple users) through the user interface, may include modifications to the contents of the objects to add nodes, or additional descriptions, as well as other modifications to the strategy map. The changes may be saved by the system to a graph database and a relational database.

Block 360 involves the determination that the document is a project document. A set of project document prompts may be processed using the document that has been identified as a project document. The strategic document prompts may be processed concurrently and incorporate outputs from Block 305 (*e.g.,* the converted document) and from Block 308 (*e.g.,* the response identifying the structures and locations within the converted document).

Block 362 involves determining detail properties for project objects. A language model may be prompted to generate a response from the converted document. The response identifies project details, which may include textual descriptions for projects, deadlines, risks, *etc.* The details of a project may be stored as properties (*e.g.,* text fields) of a project object.

Block 365 involves determining indicator properties for project objects. Indicator properties are records of performance indicators for projects. The performance indicators may include performance metrics and milestones that are extracted from the text of the converted document. A language model may be prompted to generate a response from the converted document. The response may include the performance indicators extracted from the converted document. The performance indicators in the response may be saved as properties of the project objects for a strategy map.

Block 368 involves identifying topic objects. The topic objects may describe other risks related to a project. The language model may be prompted to extract the topic objects from the converted document. The topic objects in the response from the language model may be mapped to the strategy map.

Block 370 involves mapping projects to strategy maps. A language model may be prompted with the responses from Blocks 362, 365, and 368 identifying details, indicators, and topic objects for projects as well as a strategy map. The strategy map may be the strategy map generated with the responses from Blocks 332 and 335 used to identify pillar objects and project objects. Responsive to being prompted, the language model may map the project described in the responses from Blocks 362, 365, and 368 to the pillar objects of the strategy map.

Block 372 involves presenting project objects and receiving feedback. The project objects generated responsive to Block 360 may be presented in an interactive user interface.

Block 375 involves displaying projects on a strategy map. Presentation of the objects may be within a strategy map generated from the response of the Blocks 332 and 335. Users may interact with a display of the strategy map to change the objects and properties within the strategy map.

Block 380 involves processing additional documents. A user may have selected multiple documents. After a document is processed, the next document may be selected and subsequently processed.

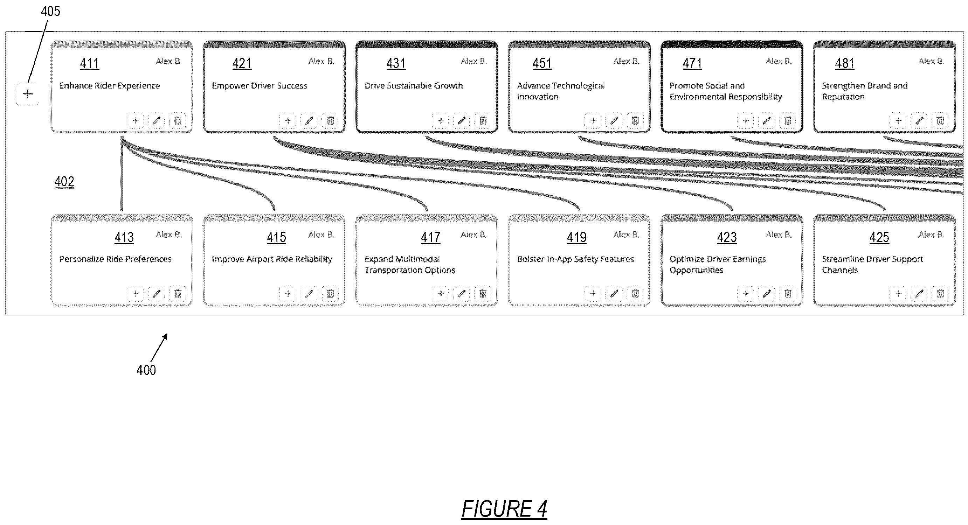

Turning to Figure 4, the user interface (400) displays the strategy map view (402). The strategy map view (402) presents a strategy map to a user. The strategy map view (402) includes several interface elements to interact with the strategy map. The interface elements displayed within the strategy map view (402) include the pillar elements (411), (421), (431), (451), (471), and (481), as well as the project elements (413), (415), (417), (419), (423), and (425). The button element (405) may be selected to add another pillar representing a pillar object and displayed by a pillar element to the strategy map displayed in the strategy map view (402).

The pillar elements (411), (421), (431), (451), (471), and (481) display information recorded in pillar objects that represent pillars of the strategy map displayed in the strategy map view (402). Each of the pillar elements (411), (421), (431), (451), (471), and (481) includes a text description from a pillar object and the text of a name from a user object identifying the user that is associated with the pillar displayed in the strategy map view (402). For example, the pillar, element (411) includes the text description "Enhance Rider Experience" as well as the text of the name "Alex B." to identify the user that is responsible for the pillar represented by the pillar element (411). Each of the pillar elements (411), (421), (431), (451), (471), and (481) also include buttons that may be interacted with to add a project to the pillar (the button with the plus icon), edit the information related to the pillar (the button with the pencil icon), and to remove the pillar (the button with the trash can icon). Each of the pillar elements (411), (421), (431), (451), (471), and (481) may be connected to multiple project elements. For example, the pillar element (411) is connected to the project elements (413), (415), (417), and (419) and the pillar element (421) is connected to the project elements (423) and (425).

The project elements (413), (415), (417), (419), (423), and (425) display information recorded in project objects that represent projects of the strategy map displayed in the strategy map view (402). Each of the project elements (413), (415), (417), (419), (423), and (425) include text descriptions of the project, the text of a name of a user associated with the project, and buttons for interacting with the project. Interaction with the buttons in a project element may be used to add topic objects and settlement objects to a project object represented by the project element, to edit the project, are presented by the project element, and to remove the project represented by the project element from the strategy map displayed on the strategy map view (402).

Each of the pillar elements (411), (421), (431), (451), (471), and (481) may be displayed with a color to differentiate the different projects. For example, the pillar element (411) may be framed with the color yellow, the pillar element (421) may be framed with the color brown, the pillar element (431) may be framed with the color red, the pillar element (451) may be framed with the color pink, the pillar element (471) may be framed with the color purple, and the pillar element (481) may be framed with the color blue. Each of the project elements (413), (415), (417), (419), (423), and (425) may be displayed with a color that corresponds to the pillar that is the parent of the project. For example, the project elements (413), (415), (417), and (419) may be framed with the color yellow to match the framing for the pillar, element (411) and the project elements (423) and (425) may be framed with the color brown to match the framing for the pillar element (421).

Each of the pillar elements (411), (421), (431), (451), (471), and (481) and the project elements (413), (415), (417), (419), (423), and (425) may be dragged and dropped within the strategy map view (402). Dragging and dropping the pillar and project elements may be done by a user to manipulate the relative locations of the pillars and projects which may also specify a relative priority of the pillars and projects. For example, pillar elements displayed to the left of other pillar elements may have a priority that is greater than pillars that are to the right. Higher priorities may correspond to lower numerical values. For example, the pillar presented by the pillar element (411) may correspond to a priority of "1" that is higher than the priority of "2" for the pillar represented by the pillar element (421). Similarly, projects that are to the left of other projects may have a priority that is greater than the projects that are to the right. For example, the projects represented by the project elements (413) and (423) may correspond to a priority of "1", which is higher than the priority of "2" for the projects represented by the project elements (415) and (425).

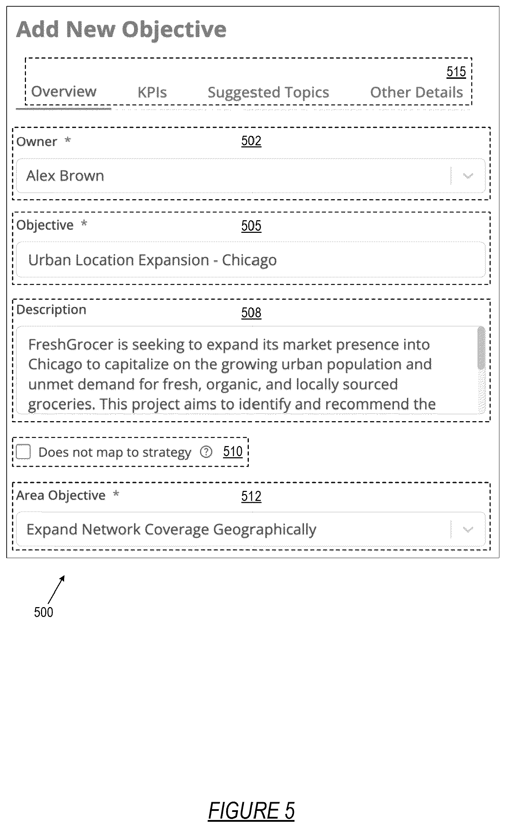

Turning to Figure 5, the add objective view (500) is part of an interactive user interface to add objective objects which may be pillar objects or project objects to a strategy map. The add objective view (500) may be displayed responsive to selection of the button element (405) of Figure 4.

The add objective view (500) includes elements to collect and display information for an objective. The element (502) is a drop down box displaying the name "Alex Brown" to identify the user responsible for the objective. The element (505) is a text box displaying a name ("Urban Location Expansion - Chicago") for the objective. The element (508) is a text box displaying a description of the objective. The element (510) is a checkbox for a mapping flag that identifies whether the objective should be mapped into a strategy map or not. The element (512) is a text box for an area description for the objective with the text "expand network coverage geographically". The mapping flag may be a binary variable in which a first value indicates that the objective should be mapped into a strategy map and a second value indicates that the objective should not be mapped into the strategy map.

The tabs (515) labeled "Overview", "KPIs", "Suggested Topics", and "Other Details" displayed within the add objective view (500) may be selected to collect different types of information for the objective. Selecting the tab labeled "KPIs" may update the add objective view (500) to display elements that collect information about performance indicators, which may identify performance metrics and milestones to be used with the objective. Selecting the tab labeled "Suggested Topics" may update the add objective view (500) to include elements that collect information about topics that may be recorded as topic objects, including guidance objects, blocker objects, and update objects. Selecting the tab labeled "Other Details" may update the add objective view (500) to display elements that collect information about additional details for the objective, which may be stored as properties in the fields of the objective object representing the objective.

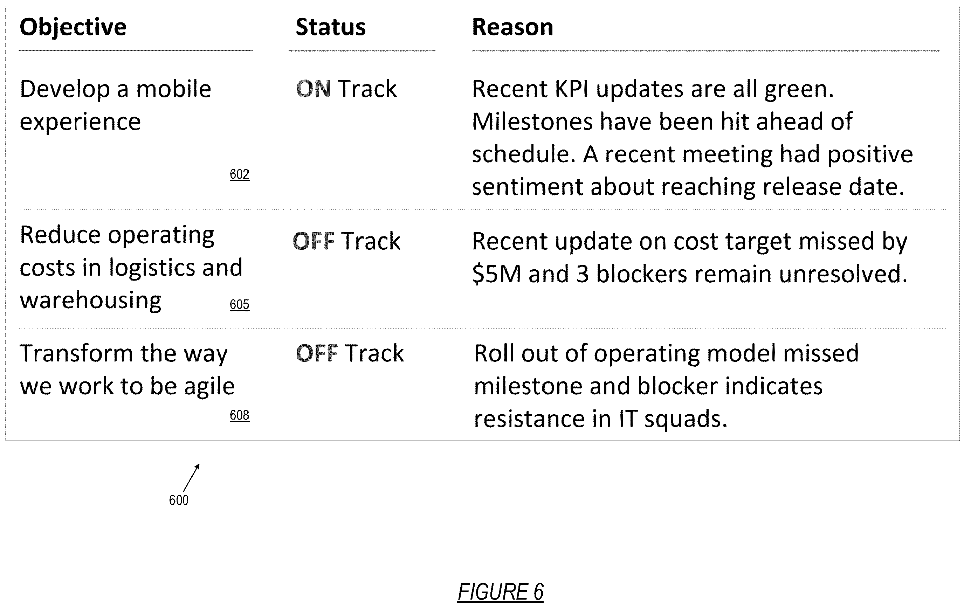

Turning to Figure 6, the user interface (600) displays a report generated for a strategy map. The report may be generated by analyzing the objects that form the strategy map to determine the presence of off track nodes and overdue nodes. A node identified as an overdue node may also be identified as an off track node. The report is in a tabular format that includes three rows corresponding to three different objective objects, which may correspond to three different pillar or project objects. The columns identify the objective, the status, and the reason for the status.

The row (602) indicates that the objective object named "Develop a mobile experience" is "on track". The objective object corresponding to the row (602) is on track because the objective object is not identified as off track and does not include subordinate objects (e.g., other child objective objects, topic objects, or settlement objects) that are identified as off track. An object may be identified as an off track node of a strategy map when a performance metric or milestone related to the node has not been satisfied.

The row (605) indicates that the objective object represented by the row (605) is off track. The objective object is identified as an off track node at least because performance metrics for the objective object have not been met.

The row (608) indicates that the objective object represented by the row (608) is off track. The objective object is identified as an off track node at least because a milestone for the objective object has not been met.

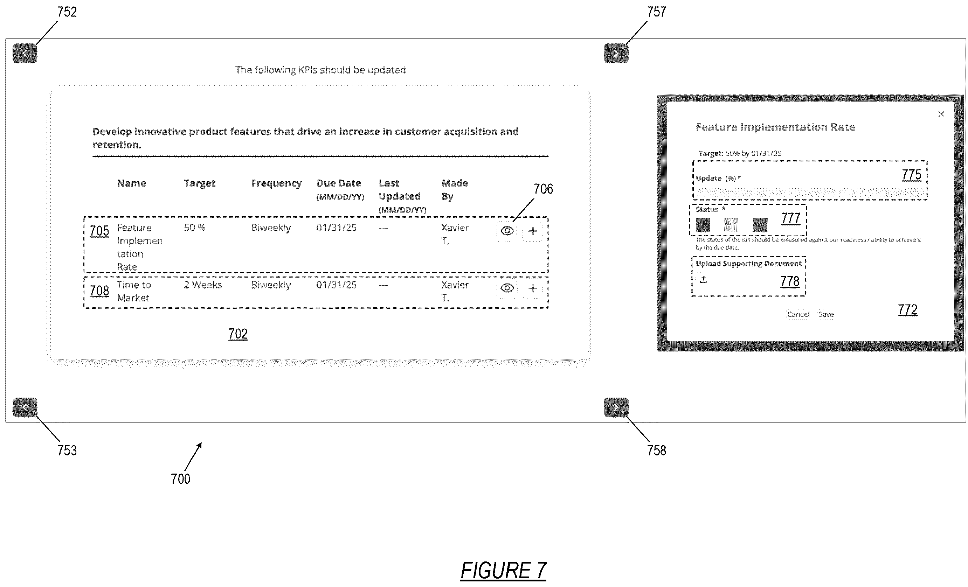

Turning to Figure 7, the user interface (700) includes the performance indicator view (702) and the indicator update view (772). The performance indicator view (702) displays a tabular listing of performance indicators related to an objective object. The tabular listing includes columns labeled "Name", "Target" "Frequency", "Due Date", "Last Updated", "Made By" and a set of buttons. Values in the "Name" column identify the name of the objective. Values in the "Target" column identify the performance metric for the performance indicator. Values in the "Frequency" column identify the number of times the target should be checked within a period of time, with biweekly meaning once every two weeks. Values in the "Due Date" column identify the date for when the target is to be met. Values in the "Last Updated" column identify the last date for which an update was received for the performance indicator. Values in the "Made By" column identify the user that made the performance metric. The set of buttons for each row includes a view button (with an eye icon) and an add button (with a plus sign icon).

The row (705) is for the performance metric named "Feature Implementation Rate" with a target of "50%" that is checked biweekly and is due to be achieved by the date "01/31/25". No updates have been received for the performance metric of the row (705) and the performance metric was made by the user named "Xavier T.". The row (705) includes the view button (706), which may be selected to display the update view (772).

The update view (772) displays interface elements (including the interface elements (775), (777), and (778)) that may be used to update the performance metric corresponding to the row (705) displayed in the performance indicator view (702). Interaction with the interface element (775) may identify the current value for the target for the performance metric. Interaction with the interface element (777) may identify a status for the performance metric. The status may be categorical and may be color coded. For example, green (shown on the left) may indicate that the status is acceptable, yellow (shown in the middle ) may indicate that the status is marginal, and red (shown on the right ) may indicate that the status is unacceptable. Interaction with the interface element (778) may select and upload a document that supports the changes to the values for the target and status of the performance metric.

The interface elements (752), (753), (757), and (758) may be used to switch to a different objective so that the performance indicator view (702) displays the performance indicators for the different objectives. The interface elements (752) and (753) may switch to display the performance indicators for a previous objective. The interface elements (757) and (758) may switch to display the performance indicators for a subsequent objective.

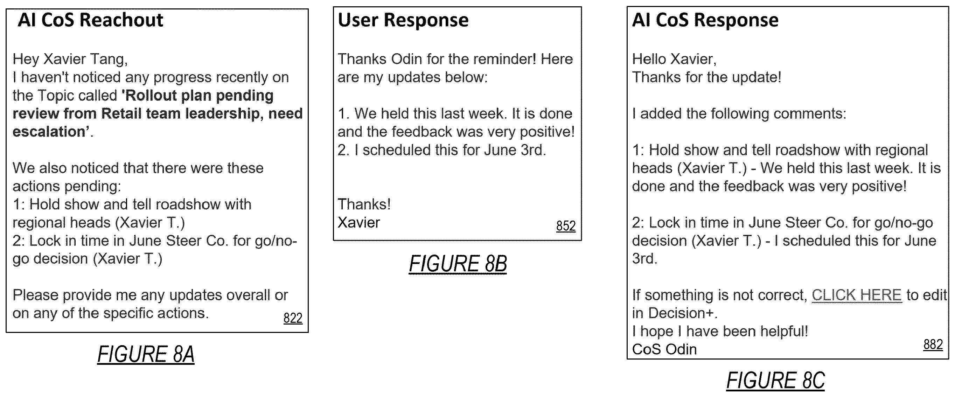

Figure 8A, Figure 8B, and Figure 8C display a chain of messages (emails) that are sent and received responsive to an analysis of a strategy map. A strategy map may include a regular cadence node identifying that an objective should be checked periodically. Responsive to the periodic check the regular cadence node may also be identified as an overdue node. Responsive to identifying the objective as an overdue node, the message (822) may be generated and presented by transmitting the message (822) to a user device and then displayed in a user interface.

Turning to Figure 8A, the message (822) may be generated with a language model prompted with the overdue node and a template or example for generating the message (822). The message (822) may be displayed on a user device. The message (822) identifies a topic object that may be subordinate to pillar or project objects of a strategy map. The message (822) also identifies pending actions that may be recorded in topic object and include performance indicators, which may include performance metrics and milestones.

Turning to Figure 8B, the message (852) may be generated with the user device that displayed the message (822). The message (852) provides updates pertinent to the action items identified in the message (822). The message (852) may be sent by the user device to the management application. The updates in the message (852) may be processed by a management application with a language model to map the updates provided in the message (852) to the performance indicators of the objects in the strategy map.

Turning to Figure 8C, the message (882) may be generated by the management application in response to the message (852) after updating the strategy map with the updates from the message (852). The message (882) identifies changes made to the strategy map based on the contents of the message (852) by the management application. The message (882) also includes a link (labeled "CLICK HERE") that may be activated by the user to view and revise the strategy map. The message (882) may be displayed on the user device.

One or more embodiments may be implemented on a computing system specifically designed to achieve an improved technological result. When implemented in a computing system, the features and elements of the disclosure provide a significant technological advancement over computing systems that do not implement the features and elements of the disclosure. Any combination of mobile, desktop, server, router, switch, embedded device, or other types of hardware may be improved by including the features and elements described in the disclosure.

For example, as shown in FIG. 9A, the computing system (900) may include one or more computer processor(s) (902), non-persistent storage device(s) (904), persistent storage device(s) (906), a communication interface (908) (e.g., Bluetooth interface, infrared interface, network interface, optical interface, etc.), and numerous other elements and functionalities that implement the features and elements of the disclosure. The computer processor(s) (902) may be an integrated circuit for processing instructions. The computer processor(s) (902) may be one or more cores, or micro-cores, of a processor. The computer processor(s) (902) includes one or more processors. The computer processor(s) (902) may include a central processing unit (CPU), a graphics processing unit (GPU), a tensor processing unit (TPU), combinations thereof, etc.

The input device(s) (910) may include a touchscreen, keyboard, mouse, microphone, touchpad, electronic pen, or any other type of input device. The input device(s) (910) may receive inputs from a user that are responsive to data and messages presented by the output device(s) (912). The inputs may include text input, audio input, video input, etc., which may be processed and transmitted by the computing system (900) in accordance with one or more embodiments. The communication interface (908) may include an integrated circuit for connecting the computing system (900) to a network (not shown) (e.g., a local area network (LAN), a wide area network (WAN), such as the Internet, mobile network, or any other type of network) or to another device, such as another computing device, and combinations thereof.

Further, the output device(s) (912) may include a display device, a printer, external storage, or any other output device. One or more of the output device(s) (912) may be the same or different from the input device(s) (910). The input device(s) (910) and output device(s) (912) may be locally or remotely connected to the computer processor(s) (902). Many different types of computing systems exist, and the aforementioned input device(s) (910) and output device(s) (912) may take other forms. The output device(s) (912) may display data and messages that are transmitted and received by the computing system (900). The data and messages may include text, audio, video, etc., and include the data and messages described above in the other figures of the disclosure.

Software instructions in the form of computer readable program code to perform embodiments may be stored, in whole or in part, temporarily or permanently, on a non-transitory computer readable medium, such as a solid state drive (SSD), compact disk (CD), digital video disk (DVD), storage device, a diskette, a tape, flash memory, physical memory, or any other computer readable storage medium. Specifically, the software instructions may correspond to computer readable program code that, when executed by the computer processor(s) (902), is configured to perform one or more embodiments, which may include transmitting, receiving, presenting, and displaying data and messages described in the other figures of the disclosure.

The computing system (900) in FIG. 9A may be connected to, or be a part of, a network. For example, as shown in FIG. 9B, the network (920) may include multiple nodes (e.g., node X (922) and node Y (924), as well as extant intervening nodes between node X (922) and node Y (924)). Each node may correspond to a computing system, such as the computing system shown in FIG. 9A, or a group of nodes combined may correspond to the computing system shown in FIG. 9A. By way of an example, embodiments may be implemented on a node of a distributed system that is connected to other nodes. By way of another example, embodiments may be implemented on a distributed computing system having multiple nodes, where each portion may be located on a different node within the distributed computing system. Further, one or more elements of the aforementioned computing system (900) may be located at a remote location and connected to the other elements over a network.

The nodes (*e.g.,* node X (922) and node Y (924)) in the network (920) may be configured to provide services for a client device (926). The services may include receiving requests and transmitting responses to the client device (926). For example, the nodes may be part of a cloud computing system. The client device (926) may be a computing system, such as the computing system shown in FIG. 9A. Further, the client device (926) may include or perform all or a portion of one or more embodiments.

The computing system of FIG. 9A may include functionality to present data (including raw data, processed data, and combinations thereof), such as results of comparisons and other processing. For example, presenting data may be accomplished through various presenting methods. Specifically, data may be presented by being displayed in a user interface, transmitted to a different computing system, and stored. The user interface may include a graphical user interface (GUI) that displays information on a display device. The GUI may include various GUI widgets that organize what data is shown, as well as how data is presented to a user. Furthermore, the GUI may present data directly to the user, e.g., data presented as actual data values through text, or rendered by the computing device into a visual representation of the data, such as through visualizing a data model.

As used herein, the term "connected to" contemplates multiple meanings. A connection may be direct or indirect (*e.g.,* through another component or network). A connection may be wired or wireless. A connection may be a temporary, permanent, or a semi-permanent communication channel between two entities.

The various descriptions of the figures may be combined and may include, or be included within, the features described in the other figures of the application. The various elements, systems, components, and steps shown in the figures may be omitted, repeated, combined, or altered as shown in the figures. Accordingly, the scope of the present disclosure should not be considered limited to the specific arrangements shown in the figures.

In the application, ordinal numbers (*e.g.,* first, second, third, etc.) may be used as an adjective for an element (*i.e.,* any noun in the application). The use of ordinal numbers is not to imply or create any particular ordering of the elements, nor to limit any element to being only a single element unless expressly disclosed, such as by the use of the terms "before," "after," "single," and other such terminology. Rather, ordinal numbers distinguish between the elements. By way of an example, a first element is distinct from a second element, and the first element may encompass more than one element and succeed (or precede) the second element in an ordering of elements.

Further, unless expressly stated otherwise, the conjunction "or" is an inclusive "or" and, as such, automatically includes the conjunction "and," unless expressly stated otherwise. Further, items joined by the conjunction "or" may include any combination of the items with any number of each item, unless expressly stated otherwise.

In the above description, numerous specific details are set forth in order to provide a more thorough understanding of the disclosure. However, it will be apparent to one of ordinary skill in the art that the technology may be practiced without these specific details. In other instances, well-known features have not been described in detail to avoid unnecessarily complicating the description. Further, other embodiments not explicitly described above can be devised which do not depart from the scope of the claims as disclosed herein. Accordingly, the scope should be limited only by the attached claims.

## Claims

1. A computer-implemented method (200) comprising:
receiving natural language input (202);
processing the natural language input using a language model to generate strategy map nodes (205);
processing the strategy map nodes and a strategy map to determine a mapping of the strategy map nodes to the strategy map (208);
processing user input to generate an updated mapping of the strategy map nodes; and
applying the updated mapping to the strategy map to generate an updated strategy map (212).

2. The computer-implemented method (200) of claim 1, further comprising:
processing the updated strategy map to identify an off track node using the language model,
and transmitting an off track message based on the off track node; and/or processing the updated strategy map to identify a regular cadence node using the language model, and transmitting a regular cadence message based on the regular cadence node;
and/or
processing the updated strategy map to identify an overdue node using the language model, and transmitting an overdue message based on the overdue node.

3. The computer-implemented method (200) of claim 1 or 2, further comprising:
using a retrieval augmented generation system to detect a duplicate between the strategy map nodes and existing strategy map nodes within the strategy map;
sending an update request when the duplicate does not have an update within an update threshold; and
sending an update notification when the update is within the update threshold.

4. The computer-implemented method of at least one of the preceding claims, further comprising:
storing the strategy map nodes in a graph database and in a relational database;
processing a query using the graph database when the query does not identify a project node in the strategy map; and
processing the query using the relational database when the query identifies the project node in the strategy map.

5. The computer-implemented method of at least one of the preceding claims, wherein processing the natural language input further comprises extracting semantic relationships from the natural language input using the language model.

6. The computer-implemented method of at least one of the preceding claims, further comprising:
displaying the updated mapping in an interactive graphical user interface; and
adjusting an adaptive layout of the strategy map responsive to the updated mapping.

7. The computer-implemented method of at least one of the preceding claims,
wherein the strategy map comprises a pillar object and a project object, and
wherein the pillar object is stored at a first location in data storage and references the project object stored at a second location in the data storage.

8. The computer-implemented method of at least one of the preceding claims, further comprising:
processing the user input received as voice input through a user interface to update the mapping.

9. A system (100) comprising:
at least one computer processor (902); and
an application that, when executing on the at least one computer processor (902), performs operations comprising:
receiving natural language input (202),
processing the natural language input using a language model to generate strategy map nodes (205),
processing the strategy map nodes and a strategy map to determine a mapping of the strategy map nodes to the strategy map (208),
processing user input to generate an updated mapping of the strategy map nodes (210), and
applying the updated mapping to the strategy map to generate an updated strategy map (212).

10. The system (100) of claim 9, wherein the application performs operations further comprising:
processing the updated strategy map to identify an off track node using the language model,
and transmitting an off track message based on the off track node; and/or processing the updated strategy map to identify a regular cadence node using the language model, and transmitting a regular cadence message based on the regular cadence node; and/or
processing the updated strategy map to identify an overdue node using the language model,
and transmitting an overdue message based on the overdue node.

11. The system (100) of claim 9 or 10, wherein the application performs operations further comprising:
using a retrieval augmented generation system to detect a duplicate between the strategy map nodes and existing strategy map nodes within the strategy map;
sending an update request when the duplicate does not have an update within an update threshold; and
sending an update notification when the update is within the update threshold.

12. The system (100) of at least one of claims 9 to 11, wherein the application performs operations further comprising:
storing the strategy map nodes in a graph database and in a relational database;
processing a query using the graph database when the query does not identify a project node in the strategy map; and
processing the query using the relational database when the query identifies the project node in the strategy map;
and/or
displaying the updated mapping in an interactive graphical user interface; and
adjusting an adaptive layout of the strategy map responsive to the updated mapping.

13. The system (100) of at least one of claims 9 to 12, wherein processing the natural language input further comprises extracting semantic relationships from the natural language input using the language model.

14. The system (100) of at least one of claims 9 to 13,
wherein the strategy map comprises a pillar object and a project object, and
wherein the pillar object is stored at a first location in data storage and references the project object stored at a second location in the data storage.

15. A non-transitory computer readable medium comprising instructions executable by at least one computer processor (902) to perform:
receiving natural language input (202);
processing the natural language input using a language model to generate strategy map nodes (205);
processing the strategy map nodes and a strategy map to determine a mapping of the strategy map nodes to the strategy map (208);
processing user input to generate an updated mapping of the strategy map nodes (210); and
applying the updated mapping to the strategy map to generate an updated strategy map (212).
